# EUROPÄISCHE PATENTANMELDUNG

(11) **EP 2 607 139 A1**
(43) Veröffentlichungstag der Anmeldung: **26.06.2013**
(21) Anmeldenummer: 12190412.2
(22) Anmeldetag: 29.10.2012
(51) Int. Cl.: B60K 26/02

(54) **Aktives Fahrpedal mit winkelabhängiger Drehmomentübertragung**

(30) Priorität: 19.12.2011 DE 102011088998
(71) Anmelder: ROBERT BOSCH GMBH, 70442 Stuttgart (DE)
(72) Erfinder: Klestil, Pavel, 37006 Srubec (CZ); Hlavka, Milos, 37312 Borovany (CZ)

(57) **Zusammenfassung**

Ein aktives Fahrpedalmodul 12 für ein Fahrzeug (10) umfasst ein Fahrpedal 14 zur Betätigung durch einen Fahrer, eine Rückstellfeder 38 zum Ausüben einer Kraft auf das Fahrpedal 14, die einer Kraft des Fahrers entgegengesetzt ist, und einen Motor 22 zum Ausüben einer einstellbaren Motorkraft auf das Fahrpedal 14. Das Fahrpedalmodul umfasst weiter ein Getriebe 24 zum Übertragen des Drehmoments auf einen Hebel 32, der eine Kraft auf das Fahrpedal 14 wirkt, mit einer von der Fahrpedalstellung 50, 52, 54 abhängigen Übersetzung.

## Beschreibung

### GEBIET DER ERFINDUNG

Die Erfindung betrifft ein Fahrpedalmodul für ein Fahrzeug.

### HINTERGRUND DER ERFINDUNG

Mit einem Fahrpedal eines Fahrzeugs kann der Vortrieb eines Fahrzeugs mit den Fußkräfte eines Fahrers eingestellt werden. Das Fahrpedal kann dabei einen Sensor umfassen, mit dem die Position des Fahrpedals ermittelt werden kann.

Einige Fahrzeugtypen werden darüber hinaus mit aktiven Fahrpedalmodulen ausgestattet, wie es beispielsweise in der DE 103 24 811 A1 beschrieben ist. Mit aktiven Fahrpedalmodulen können haptischen Rückmeldungen, beispielsweise mittels eines Motors, am Fahrpedal erzeugt und an den Fahrer über das Fahrpedal abgegeben werden.

Der Motor ermöglicht es, Gegenkräfte und verschiedene Signaltypen wie Vibration, Pulse und Doppelpulse an den Fahrer über dessen Fuß zurückzumelden. Diese Signale können dazu dienen, den Fahrer entweder zu warnen (Geschwindigkeitsüberschreitung / Kurve), oder aber in Verbindung mit Komfortfunktionen das Fahren sicherer und sparsamer zu machen (beispielsweise mittels einer haptische Abgrenzung verschiedener Motorzustände bei einem elektrischen Antrieb oder einem Hybridantrieb).

Der Motor wird in der Regel mit Strom betrieben. Bei einem vermehrten Einsatz des aktiven Fahrpedals zur Signalerzeugung und insbesondere beim Dauerbetrieb des Motors bei Komfortfunktionen stellt das Fahrpedal einen nicht zu vernachlässigenden Stromverbraucher im Fahrzeug dar.

### ZUSAMMENFASSUNG DER ERFINDUNG

Es ist Aufgabe der Erfindung ein aktiven Fahrpedals energiesparend, kostengünstig und klein auszugestalten.

Diese Aufgabe wird durch den Gegenstand des unabhängigen Anspruchs gelöst. Weitere Ausführungsformen der Erfindung ergeben sich aus den abhängigen Ansprüchen und aus der folgenden Beschreibung.

Ein Aspekt der Erfindung betrifft ein aktives Fahrpedalmodul für ein Fahrzeug, beispielsweise einen PKW, LKW sowie andere Verkehrsmittel wie einen Bus, beispielsweise einen Oberleitungsomnibus.

Gemäß einer Ausführungsform der Erfindung umfasst das Fahrpedalmodul ein Fahrpedal zur Betätigung durch einen Fahrer, beispielsweise über eine Fußhebel; eine Rückstellfeder zum Ausüben einer Kraft auf das Fahrpedal, die einer Kraft des Fahrers entgegengesetzt ist und einen Motor zum Ausüben eines einstellbaren Drehmoments auf das Fahrpedal. Der Motor kann ein elektrischer Motor, beispielsweise ein Drehstrommotor und/oder Stellmotor sein, und kann derart angesteuert werden, dass er eine variable Kraft auf das Fahrpedal ausübt, um beispielsweise Signale oder haptische Rückmeldungen an den Fahrer zu übermitteln.

Weiter umfasst das Fahrpedal ein Getriebe zum Übertragen des Drehmoments vom Motor_auf das Fahrpedal mit einer von der Fahrpedalstellung abhängigen (Drehmoment-)Übersetzung. Damit kann eine Gegenkraft zur Kraft des Fahrerfußes durch das Drehmoment aus dem Motor und dem Getriebe generiert werden. Das Drehmoment kann beispielsweise von einem Motorhebel auf das Fahrpedal übertragen werden, der dann eine entsprechende Kraft auf das Fahrpedal ausübt.

Es ist zu verstehen, dass unter einem Getriebe jede Art von mechanischer Einrichtung angesehen werden kann, die dazu in der Lage ist ein erstes Drehmoment bzw. erste Kraft in ein zweites Drehmoment bzw. zweite Kraft umzuwandeln. Ein Getriebe kann beispielsweise auf Zahnrädern, Zahnstangen, Nocken, Exzentern oder Hebeln basieren.

Die Fahrpedalstellung kann sich auf eine Winkelstellung des Fahrpedals bzw. des Fußpedals beziehen. Beispielsweise kann das Fahrpedal zwischen einer Leerlaufstellung und einer Volllaststellung durch den Fahrer hin- und her bewegt werden. Im allgemeinen kann das Getriebe generell das Drehmoment wandeln und damit die Kräfte durch den Motorhebel ändern.

Mit dem Getriebe kann eine winkelabhängige Übersetzung zwischen dem Fahrpedal und dem Motor auf einer rein mechanischen Basis realisiert werden. Die Übersetzung des Getriebes kann in einer ersten Stellung größer als in einer zweiten Stellung sein.

Durch das Getriebe sind insbesondere verschiedene Lösungen für die Kräfte und Gegenkräfte zwischen Fahrer und Fahrpedal realisierbar, die den Motor entlasten können. In einer Stellung, in der die Übersetzung zu einer höheren Kraft führt, muss durch den Motor nur ein kleines Drehmoment ausgeübt werden. Der Motor kann somit klein, stromsparend und preisgünstig ausgelegt werden. Außerdem muss der Motor in bestimmten Stellungen nicht dauerhaft betrieben werden und spart dadurch Strom.

Gemäß einer Ausführungsform der Erfindung weist das Getriebe einen mit dem Motor verbunden Motorhebel auf, der dazu ausgeführt ist, das Motordrehmoment auf einen mit dem Fahrpedal verbunden Hebel zu übertragen. Der Motorhebel und der Fahrpedalhebel müssen nicht über ein Gelenk miteinander verbunden sein, sondern das auf den Fahrpedalhebel Kräfte wirkende Ende des Motorhebels kann relativ zum Fahrpedalhebel beweglich sein. Auf diese Weise kann das Verhältnis von Hebelarmen der beiden Hebel in unterschiedlichen Stellungen des Fahrpedals unterschiedlich sein.

Der mit dem Fahrpedal verbundene Hebel bzw. der Fahrpedalhebel kann als Nase am Fahrpedal ausgeführt sein, die von der Drehachse des Fahrpedals weg weist.

Gemäß einer Ausführungsform der Erfindung sind die Drehachse des Motorhebels und des Fahrpedalhebels derart zueinander angeordnet, dass die relative Länge eines Hebelarms des Motorhebels und eines Hebelarms des Fahrpedalhebels von der Fahrpedalstellung abhängt. Mit anderen Worten kann das Verhältnis der Hebelarme durch die Stellung des Fahrpedals eingestellt werden.

Gemäß einer Ausführungsform der Erfindung überträgt der Motorhebel über eine Lauffläche des Fahrpedalhebels die Kraft auf das Fahrpedal. Der Motorhebel kann beispielsweise auf die Lauffläche drücken, wodurch abhängig vom Kontaktpunkt des Motorhebels und der Lauffläche unterschiedlich Lange Hebelarme entstehen.

Die Lauffläche kann in eine Richtung weisen, so dass eine Übertragung auf das Fahrpedal entgegengesetzt der durch den Fahrer ausgeübten Kraft möglich ist.

Beispielsweise kann eine Übertragung nur in eine Richtung möglich sein, beispielsweise in eine Richtung entgegengesetzt der Richtung, in die das Fahrpedal durch den Fahrer beim Drücken des Fußpedals bewegt wird.

Ein Ende des Motorhebels kann aber auch in einer länglichen Öffnung des Fahrpedalhebels geführt sein, so dass auch eine Übertragung in beide Bewegungsrichtungen des Fahrpedal möglich ist.

Gemäß einer Ausführungsform der Erfindung verläuft die Lauffläche geradlinig. Die Lauffläche kann sich in eine Richtung erstrecken, die von der Drehachse des Fahrpedal weg weist.

Gemäß einer Ausführungsform der Erfindung ist der Fahrpedalhebel bezüglich eines Drehachse des Fahrpedals einem Fußpedal, das dazu ausgeführt ist, durch den Fahrer betätigt zu werden, oder einer Fußplatte des Fahrpedals gegenüberliegend angeordnet. Ein beispielsweise als Nase ausgeführter Fahrpedalhebel kann also dem Fußpedal gegenüberliegend von der Drehachse des Fahrpedals abstehen.

E ist jedoch auch möglich, das der Fahrpedalhebel und der Fußpedalhebel übereinstimmen und der Motorhebel auf der Seite des Fahrers bzw. des Fußpedals eine Kraft auf das Fahrpedal ausübt, um eine Gegenkraft zu erzeugen.

Gemäß einer Ausführungsform der Erfindung weist der Motorhebel eine Rolle auf, die auf dem Fahrpedalhebel bzw. der Lauffläche abrollt. Mit der Rolle kann eine Reibung zwischen dem Motorhebel und dem Fahrpedalhebel vermindert werden. Der Motorhebel kann also als Rollenhebel realisiert sein, um die Effizienz und die Lebensdauer des Fahrpedalmoduls zu erhöhen.

Gemäß einer Ausführungsform der Erfindung umfasst das aktive Fahrpedalmodul weiter ein Zahnradgetriebe zum Übertragen eines Drehmoments des Motors auf den Motorhebel. Somit kann die vom Motor auf den Motorhebel ausgeübte Kraft auch unabhängig von der Fahrpedalstellung eingestellt werden.

Gemäß einer Ausführungsform der Erfindung umfasst das aktive Fahrpedalmodul weiter eine Steuerung zum Einstellen des durch den Motor erzeugten Drehmoments. Das vom Motor erzeugte Drehmoment wird in der Regel abhängig vom Strom durch den Motor sein. Die Höhe dieses Strom kann von der Steuerung eingestellt werden.

Weiter kann die Steuerung dazu ausgeführt sein, abhängig von einer gewünschten Gegenkraft, die das Fahrpedal erzeugen soll, das durch den Motor erzeugte Drehmoment zu bestimmen. Dazu kann die Steuerung Signale von einem Fahrpedalsensor zum Erfassen einer Stellung des Fahrpedals und/oder einem Motorhebelsensor zum Erfassen einer Stellung des Motorhebels empfangen und weiterverarbeiten. Aus der Fahrpedalstellung und/oder der Motorhebelstellung kann die Steuerung das für diese Stellung geltende Übersetzungsverhältnis des Getriebes bestimmten und daraus die zum Erzeugen der Gegenkraft benötigte Kraft bestimmen.

Das Übersetzungsverhältnis kann von der Steuerung beispielsweise mit einer in der Steuerung abgelegten Tabelle bestimmt werden.

Die Steuerung kann entweder direkt durch eine Elektronik des aktiven Fahrpedalmoduls oder über ein anderes Fahrzeugsystem erfolgen.

Im Folgenden werden Ausführungsbeispiele der Erfindung mit Bezug auf die beiliegenden Figuren detailliert beschrieben.

### KURZE BESCHREIBUNG DER FIGUREN

Fig. 1 zeigt schematisch ein Fahrzeug mit einem aktiven Fahrpedalmodul gemäß einer Ausführungsform der Erfindung.
Fig. 2 zeigt eine dreidimensionale Ansicht eines aktiven Fahrpedalmoduls gemäß einer Ausführungsform der Erfindung.
Fig. 3a zeigt schematisch ein aktives Fahrpedalmoduls gemäß einer Ausführungsform der Erfindung in einer Leerlaufstellung.
Fig. 3b zeigt schematisch ein aktives Fahrpedalmoduls gemäß einer Ausführungsform der Erfindung in einer Mittelstellung.
Fig. 3c zeigt schematisch ein aktives Fahrpedalmoduls gemäß einer Ausführungsform der Erfindung in einer Volllaststellung.
Fig. 4 zeigt ein Kraft-Weg-Diagramm für ein aktives Fahrpedalmodul gemäß einer Ausführungsform der Erfindung.

Grundsätzlich sind identische oder ähnliche Teile mit den gleichen Bezugszeichen versehen.

### DETAILIERTE BESCHREIBUNG VON AUSFÜHRUNGSBEISPIELEN

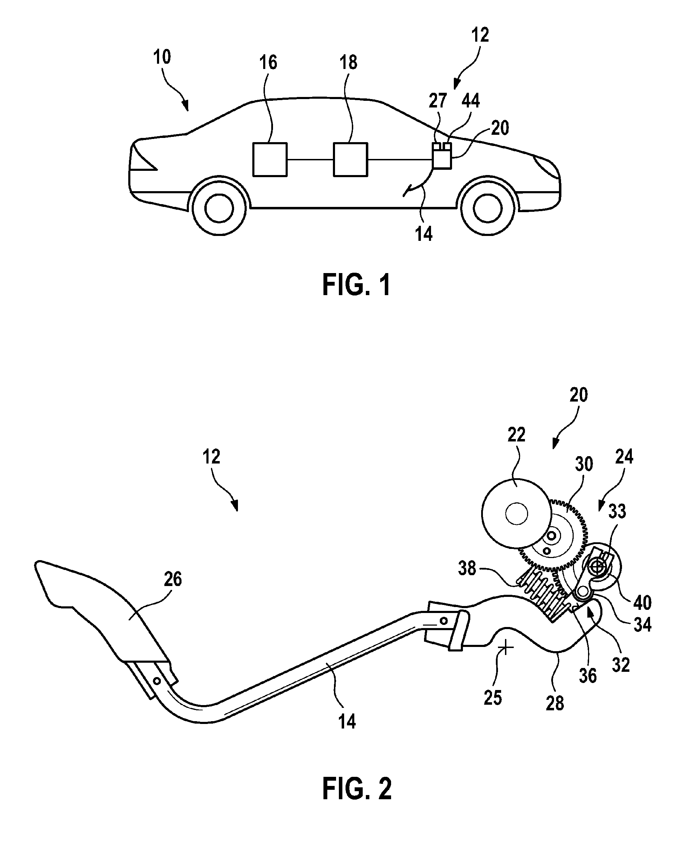

Fig. 1 zeigt ein Fahrzeug 10 mit einem aktiven Fahrpedalmodul 12, das ein Fahrpedal 14 umfasst, mit dem ein Fahrer einstellen kann, wie stark ein Antrieb 16 des Fahrzeugs 10 arbeiten soll. Dazu kann der Fahrer das Fahrpedal 14 von einer Leerlaufstellung bis zu einer Volllaststellung durchdrücken. Das Fahrpedalmodul 12 kann dabei ein stehendes Fahrpedalmodul 12, ein hängendes Fahrpedalmodul 12 aber auch eine Kombination davon sein. Der Antrieb 16 kann einen Verbrennungsmotor umfassen, der mit Benzin, Gas oder Diesel betrieben werden kann.

Ein Aktuator 20 mit einem Motor 22 und einem Getriebe 24 (siehe Fig. 2) kann eine Kraft. bzw. Gegenkraft auf das Fahrpedal 14 erzeugen, mit der mittels Pulsen, Vibrationen oder einer über eine Normalkraft erhöhte Gegenkraft eine haptische Rückmeldung an den Fahrer übermittelt werden kann.

Eine Steuerung 18 kann die Stellung des Fahrpedals 14 mit einem Fahrpedalsensor 27 erfassen und den Antrieb 16 entsprechend ansteuern. Weiter kann die Steuerung 18 den Aktuator 20 derart ansteuern bzw. die Höhe des Stroms für den Motor 22 derart einstellen, dass eine gewünschte Gegenkraft für das aktive Fahrpedalmodul 12 erzeugt wird.

Die Fig. 2 zeigt einen Teil der Komponenten das Fahrpedalmoduls 12 in einer dreidimensionalen Seitenansicht. Das Fahrpedal 14 ist um eine Drehachse 25 drehbar und umfasst ein Fußpedal 26 und einen weiteren Hebel 28, der in der Form einer Nase 28 gegenüberliegend vom dem Fußpedal 26 bezüglich der Drehachse 25 vom Fahrpedal 14 absteht. Das Fußpedal 26 und die Fahrpedalnase 28 sind starr miteinander verbunden.

Der Drehstrommotor 22 ist über ein Zahnradgetriebe 30 ( beispielsweise mit zweistufigem Stirnradgetriebe, Schneckengetriebe, Kegelradgetriebe, Planetengetriebe) mit einem Motorhebel 32 verbunden, der um eine Drehachse 33 drehbar ist. An seinem Ende weist der Motorhebel 32 ein Rolle 34 auf, die auf einer Lauffläche 36 auf der Fahrpedalhebel 28 abrollen kann. Der Motorhebel 32 wirkt dabei direkt auf den Fahrpedalhebel 28, in dem er auf den Fahrpedalhebel 28 mit der Rolle 34 drückt.

Das Fahrpedalmodul 12 umfasst weiter eine Rückstellfeder 38, die eine konstante Gegenkraft in die Richtung aufbringt, in die auch der Motorhebel 32 wirkt. Die insgesamt von dem Fahrpedalmodul 12 erzeugte Gegenkraft ist die Summe aus der Rückstellkraft der Feder 38 und der durch den Motorhebel 32 auf das Fahrpedal 14 ausgeübten Kraft.

Das Getriebe 24 umfasst außerdem eine Torsionsfeder 40, die zum Rückstellen des Motorhebels 32 dient. Es ist auch möglich, dass die Torsionsfeder 40 den Motorhebel 32 in Kontakt mit dem Fahrpedal 14 drückt. Eine Kombination von beiden Alternativen ist auch möglich.

Die in der Fig. 1 gezeigte Steuerung 18 kann die Stellung des Motorhebels 32 mit einem Motorhebelsensor 44 ermitteln und dann daraus, wie weiter oben ausgeführt, das aktuelle Übersetzungsverhältnis bestimmen, um so die durch den Motorhebel 32 auf den Fahrpedalhebel 28 ausgeübte Kraft berechnen zu können.

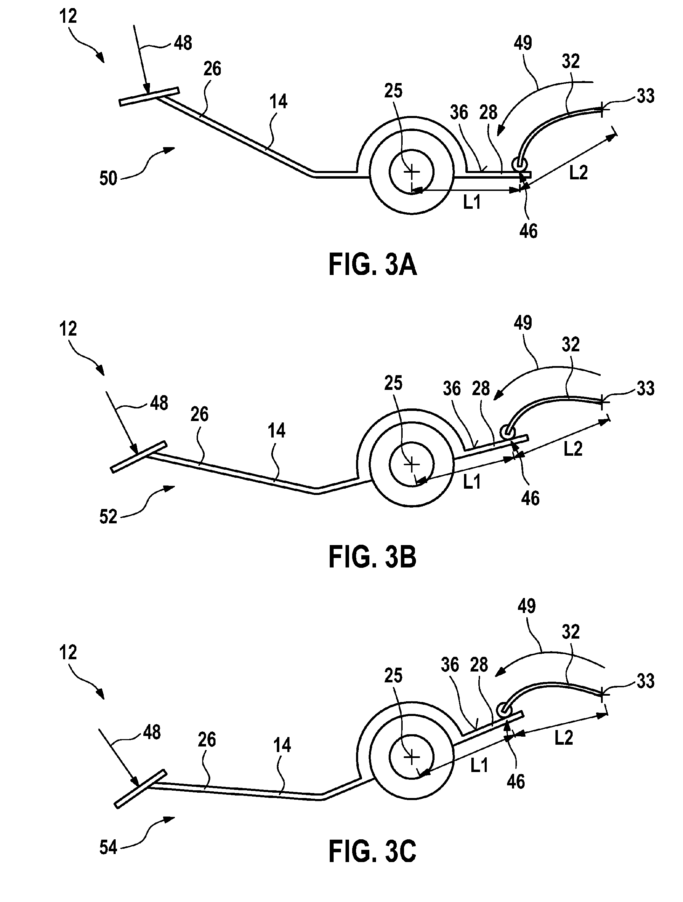

In den Fig.3a bis 3c ist dargestellt, wie der Motorhebel 32 über die Pedalnase 28 bei einem vollen Hub des Fahrpedals 14 läuft und wie das Getriebe 24 mit dem Motorhebel 32 eine von der Fahrpedalstellung abhängige Übersetzung erzeugen kann.

In den Fig. 3a bis 3c ist auch die Kraft 48, die der Fahrer auf das Fahrpedal 14 ausübt, und die Kraft 49, die der Motor 22 über das Getriebe 30 und den Motorhebel 32 auf das Fahrpedal 14 ausübt, schematisch dargestellt.

In der Fig. 3a ist das Fahrpedalmodul 12 in einer Leerlaufstellung gezeigt. Der Motohebel 32 berührt den Fahrpedalhebel 28 in einem Berührpunkt 46, wodurch ein Hebelarm L₁ für den Fahrpedalhebel 28 und ein Hebelarm L₂ für den Motorhebel 32 definiert werden, die sich jeweils vom Drehpunkt 25, 33 zum Berührpunkt 46 erstrecken.

Die Drehpunkte 25, 33 und die beiden Hebel 28, 32 sind dabei so ausgeführt, dass in der in der Fig. 3a gezeigten Leerlaufstellung 50 die beiden Hebelarme in einem Winkel, der sich von 180° unterscheidet, zueinander stehen.

Wenn der Motorhebel 32 und der Fahrpedalhebel 28 jeweils um ihre Drehachsen 25, 33 bewegt werden, wandert ein Punkt auf dem jeweiligen Hebel 28, 32 in einer Kreisbahn um die jeweilige Drehachse 25, 33. Dadurch nähern sich ein Punkt auf dem Motorhebel 32 und ein Punkt auf dem Fahrpedalhebel 28 einander an, wenn sich der Winkel zwischen den Hebelarme L₁, L₂ 180° annähert.

Dies ist in der Fig. 3b dargestellt, die eine Mittelstellung 52 zwischen der Leerlaufstellung und der Vollaststellung 54 zeigt, bei der die Hebelarme L₁, L₂ im Wesentlichen parallel verlaufen. In dieser Stellung ist der Hebelarm L₁ am kürzesten. Die Länge des Hebelarms L₂ hat sich nicht verändert.

Wird der Fahrpedalhebel 14 weiter über die Mittelstellung hinaus in Richtung der Volllaststellung 54 bewegt, wird der Hebelarm L₁ wieder länger.

Während der Bewegung von der Leerlaufstellung 50 in die Volllaststellung 54 hat sich das Ende des Motorhebels 32 und damit der Berührpunkt 44 auf der Laufbahn 36 der Drehachse 25 angenähert und sich wieder davon entfernt.

Das Übersetzungsverhältnis der Kraft, die von dem Motor 22 (über das Getriebe 30) auf den Motorhebel 32 ausgeübt wird, zu der Kraft, die der Motorhebel auf das Fahrpedal 14 ausübt, ist umgekehrt proportional zur Länge des Hebelarms L₁. Je kürzer der Hebelarm L₁ ist, um so kleiner ist die Kraft, die auf das Fahrpedal 14 ausgeübt wird.

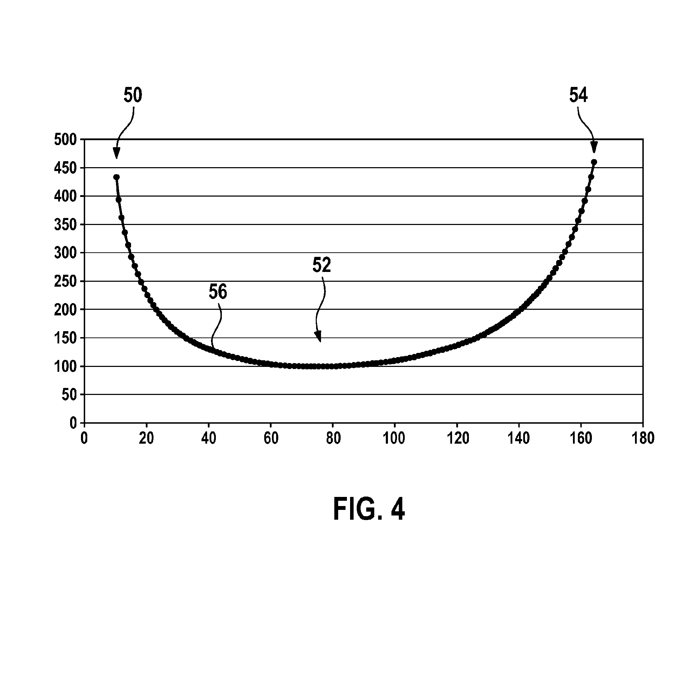

Fig. 4 zeigt ein Diagramm, bei der nach rechts der Pedalweg und nach oben die Kraft 49 des Motorhebels 32 auf das Fahrpedal 14 aufgetragen ist. Die gezeigte Kurve 56 stellt den Kraftverlauf einer Kraft 49 bei konstantem Strom für den Motor 22 dar, der damit eine konstante Kraft auf den Motorhebel 32 ausübt.

Wie aus der Kurve 56 zu erkenne ist, ist die in den Stellungen 50, 54 ausgeübte Kraft größer als in der Mittelstellung 52.

Es ist zu verstehen, dass die Kurve 56 auch asymmetrisch sein kann. Beispielsweise kann die in der Leerlaufstellung 50 erzeugte Kraft am kleinsten sein und bis zur Vollaststellung kontinuierlich ansteigen. Dies kann durch entsprechendes Positionieren der Drehachsen und der Hebelarme L₁, L₂ relativ zu den Stellungen 50, 52, 54 erreicht werden.

Durch Stromregulation des Motors 22 über die Steuerung 18 können konstante Kräfte während der Bewegung aus der Leerlaufstellung 50 bis zur Volllaststellung 54 realisiert werden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Aktives Fahrpedalmodul (12) für ein Fahrzeug (10), das Fahrpedalmodul (12) umfassend:
ein Fahrpedal (14) zur Betätigung durch einen Fahrer;
eine Rückstellfeder (38) zum Ausüben einer Kraft auf das Fahrpedal (14),
die einer Kraft des Fahrers entgegengesetzt ist;
einen Motor (22) zum Ausüben eines einstellbaren Drehmoments auf das Fahrpedal (14);
**gekennzeichnet durch**
ein Getriebe (24) zum Übertragen des Drehmoments auf das Fahrpedal (14) mit einer von der Fahrpedalstellung (50, 52, 54) abhängigen Übersetzung.

2. Aktives Fahrpedalmodul (12) nach Anspruch 1,
wobei das Getriebe (24) einen mit dem Motor (22) verbunden Motorhebel (32) aufweist, der dazu ausgeführt ist, das Drehmoment auf einen mit dem Fahrpedal (14) verbunden Hebel (28) zu übertragen.

3. Aktives Fahrpedalmodul (12) nach Anspruch 2,
wobei Drehachsen (33) des Motorhebels (32) und des Fahrpedalhebels (28) derart zueinander angeordnet sind, dass die relative Länge eines Hebelarms (L₂) des Motorhebels (32) und eines Hebelarms (L₁) des Fahrpedalhebels (28) von der Fahrpedalstellung (50, 52, 54) abhängt.

4. Aktives Fahrpedalmodul (12) nach Anspruch 2 oder 3,
wobei der Motorhebel (32) über eine Lauffläche (36) des Fahrpedalhebels (28) das Drehmoment auf das Fahrpedal (14) überträgt.

5. Aktives Fahrpedalmodul (12) nach Anspruch 4,
wobei die Lauffläche (36) geradlinig ist.

6. Aktives Fahrpedalmodul (12) nach einem der Ansprüche 2 bis 5,
wobei der Fahrpedalhebel (28) bezüglich einer Drehachse (25) des Fahrpedals (14) einem Fußpedal (26) des Fahrpedals (14) gegenüberliegend angeordnet ist.

7. Aktives Fahrpedalmodul (12) nach einem der Ansprüche 2 bis 6,
wobei der Motorhebel (32) eine Rolle (34) aufweist, die auf dem Fahrpedalhebel (28) abrollt.

8. Aktives Fahrpedalmodul (12) nach einem der Ansprüche 2 bis 8, weiter umfassend:
ein Zahnradgetriebe (30) zum Übertragen des Drehmoments des Motors (22) auf den Motorhebel (32).

9. Aktives Fahrpedalmodul (12) nach einem der vorhergehenden Ansprüche, weiter umfassend:
eine Steuerung (18) zum Einstellen des durch den Motor (22) erzeugten Drehmoments.
